# EUROPEAN PATENT APPLICATION

(11) **EP 2 717 204 A1**
(43) Date of publication of application: **09.04.2014**
(21) Application number: 13186816.8
(22) Date of filing: 01.10.2013
(51) Int. Cl.: G06Q 10/10, G06Q 10/00

(54) **Method for recruitment adapted for mobile platform, server and computer program product therefore**

(30) Priority: 02.10.2012 EP 12186922; 26.06.2013 EP 13173739
(71) Applicant: StepStone GmbH, 10969 Berlin (DE)
(72) Inventor: de Rassenfosse, Christophe, 1080 Brussels (BE)
(74) Representative: Brants, Johan P.E.

(57) **Abstract**

The present invention relates a method, a server and a computer program product for recruitment adapted for mobile platform.

## Description

### FIELD OF THE INVENTION

The present invention relates a method, a server and a computer program product for recruitment adapted for mobile platform.

### BACKGROUND

Conventional recruitment or job web sites for personal computer platform contain a lot of information. When such web sites are accessed from the mobile platform such as a mobile phone, problems will arise due to having to transfer or display too much information. More and more people regularly use mobile phones instead of using personal computers to surf the Internet. Conventional recruitment sites are tailored for personal computer use and are not adapted for the mobile platform.

Document WO2012079284A1 discloses such a method for a mobile job website, which adapts job information to cellular phones, smart phones and iPad (RTM: tablet computer developed from Apple).

A problem with mobile job websites is that mobile users are on-the-go and they will spend little time to browse a job website and search and/or apply for jobs.

Another problem is that on most mobile devices, the speed of service is very slow, often slower than dial-up Internet access. Historically on mobile web, often only one page can be displayed at a time.

Another problem is that typically a job website is not adapted for being displayed on mobile devices. Often a job portal offers job listings of different sources, such as from webpages on the job portal site itself, or from external webpages, offered by the job provider itself. Therefore, all these job websites would need a separate mobile adapted webpage in order to comply with mobile devices.

Users generally prefer to apply for jobs on desktop or laptop computers. Therefore, job conversion rates remain low for users entering job webpages through their mobile devices.

The aim of the present invention is to provide a solution to overcome at least part of the above mentioned disadvantages. The invention thereto aims to provide an enhancement in usability and user experience of a job web site by displaying the information to the user in a succinct manner together with enabling a job seeker to find and/or apply for a job offer within a smaller or more reasonable access time to the mobile job website.

### SUMMARY

The present invention provides in one embodiment, a method for recruitment adapted for mobile platform, comprising retrieving information on at least one job offer from a job database server and providing said information of said at least one job offer to a mobile page generation module of a mobile device of a potential job candidate, whereby said information of said at least one job offer is displayed on a zoomable and/or scrollable area of a display of said mobile device and whereby one or more call-to-action elements are displayed on a non-zoomable and non-scrollable area of said mobile device display.

Typically, said information is not adapted to be displayed on a mobile platform. The invention therefore provides a more convenient and more economical method for a job seeker to be able to utilize said information on a mobile platform.

In a second embodiment, the present invention provides a server for recruitment adapted for mobile platform.

In a third embodiment, the present invention provides a computer program product for recruitment adapted for mobile platform.

While multiple embodiments are disclosed, still other embodiments of the present invention will become apparent to those skilled in the art from the following detailed description, which shows and describes illustrative embodiments of the invention. As will be realized, the invention is capable of modifications in various obvious aspects, all without departing from the spirit and scope of the present invention. Accordingly, the drawings and detailed description are to be regarded as illustrative in nature and not restrictive.

### DESCRIPTION OF THE FIGURES

Further features, advantages and objects of the present invention will become apparent for the skilled person when reading the following detailed description of embodiments of the present invention, when taken in conjunction with the figures of the enclosed drawings.
**FIG. 1** is a flow-chart diagram illustrating an exemplary method for recruitment adapted for mobile platform.
**FIG. 2** is a screenshot of a display of a mobile device illustrating an exemplary method for recruitment adapted for mobile platform.

### DETAILED DESCRIPTION OF THE INVENTION

The present invention relates to a method for recruitment adapted for mobile platform. Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

In a first aspect the present invention provides a method for recruitment adapted for mobile platform, comprising:
a. retrieving information on at least one job offer from a job database server;
b. providing said information of said at least one job offer to a mobile page generation module of a mobile device of a potential job candidate;
whereby said information of said at least one job offer is displayed on a zoomable and/or scrollable area (30) of a display of said mobile device and whereby one or more call-to-action elements are displayed on a non-zoomable and non-scrollable area (31) of said mobile device display.

This is an improvement for a job seeker to be offered information on a job listing on a mobile device display, which the seeker is able to zoom in and out and is able to scroll, together with the fact that call-to-action elements are displayed in a non-zoomable and non-scrollable area. So, when the job seeker is e.g. zooming in, out, scrolling down or up, the seeker does not have the problem that a present call-to-act element can not be reached, since these elements will always be present on an area of said display. Therefore, the job seeker is able to quickly read, navigate through and act on the information of a displayed job offer.

Another advantage is that a job seeker does not longer needs to stay in front of the computer for a prolonged period of time in order to act on a job offer or even to apply for a job, since said method provides an enhancement in user experience for a job web site by displaying the information to the user in a succinct manner together with enabling a job seeker to find, act on and/or apply for a job offer within a smaller or more reasonable access time to the mobile job website.

As used herein, a "mobile device" or "mobile phone" refers to a device that a user hand-carries and can communicate to a backend server (e.g. job database server) via wireless means. Typically it has a small display screen that is around 2 to 5 inches (diagonally) and encompasses cellular phones, 'smart phones' and the likes. The new class of tablet devices such as the iPad from Apple is also another form of mobile device.

The term "zoomable" is used herein tot refer to an area of the display where users can change the scale of the viewed area in order to see more detail or less.

The term "scrollable" is used herein tot refer to sliding text, images, video etc. across a display area, by preference vertically or horizontally.

The term "call-to-action element" is used herein tot refer to elements in a web page that solicit an action from the user. By preference said call-to-action elements are clickable buttons. These buttons can be clicked on and when clicked, an action is performed. Examples of such clickable elements can be a send-button (20), a search-button (21), an apply-button, etc.

In a preferred embodiment, the method further comprises storing one or more job offers from one or more job offer sources and inserting said one or more job offers into said job database server.

It is advantageous to keep a job database server up to date with the most recent job listings or job offers available.

As used herein, "job offer sources" refer to e.g. a portal site where job offers are downloaded from, a web publishing site through the internet where job offers are downloaded from, manually entering of job offers or automatically fed job offers.

In a preferred embodiment, the method further comprises collecting specific device characteristics of said mobile device of said job candidate.

The term "specific device characteristics" is used herein tot refer to e.g. screen size, color depth, audio and vibration characteristics of said mobile device.

In a preferred embodiment, the method further comprises removing redundant information from retrieved information on said at least one job offer from said job database server depending on said specific device characteristics.

Many pages, in their conversion to mobile format, are squeezed into an order different from how they would customarily be viewed on a desktop computer. Many sites that can be accessed on a desktop cannot on a mobile device. Many mobile devices do not support pages with a secured connection, Flash or other similar software, PDFs, cookies, or video sites. E.g. job offers in HTML code have unpredictable CSS styling and JavaScript that may conflict with the Mobile Website's ones, if the listing code is placed inline in a page.

It is advantageous to remove such "redundant information" from the job offer information, e.g. CSS code, all code outside of <body> in case of HTML code, Javascript, etc. Also, this reduces the information transfer for a mobile phone, and thus facilitates the display of information to the mobile platform user.

In a preferred embodiment, said provided information further comprises company branding information from said job database server for said at least one job offer.

The term "company branding" is used herein to refer to company style (10), logo (11), borders (12), font (13), color (14), website link, etc.

An advantage is that displaying a company logo, style, border, font, color, etc. to the user has a company branding effect. It improves the impression of the company to the user. A link for the specific company when displayed to the user also acts as an advertisement campaign for the company and has a "company branding" effect to the user.

In a preferred embodiment, said one or more call-to-action elements comprises a send-button (20), wherein when clicking said send-button (20) a mail with said job offer information is send to said candidate, said mail comprising a link to a job listing page on the employment portal or on a client site. Alternatively, this could be a link to a social network account such as e.g. Facebook, Twitter or LinkedIn.

An advantage is that the user does not need to immediately submit his/her resume at the time of application.

In a preferred embodiment, said one or more call-to-action elements comprises a search-button (21), wherein when clicking said search-button (21) a job listing search page is displayed on said mobile device display.

In a preferred embodiment, said one or more call-to-action elements comprises an apply-button, wherein when clicking said apply-button said candidate applies for said job offer and optionally details of said candidate are forwarded to a job offer employer.

In a preferred embodiment, said information of said at least one job offer is job website content.

The term "job website" is used herein to refer to a conventional website or webpage, as usually displayed on a desktop or laptop computer, wherein career opportunities or open job positions are listed, such as a company's own website or websites that specialize in posting job listings.

Typically, conventional job websites are not adapted to be displayed on a mobile platform. This method is advantageous as it provides a more convenient and more economical method for a job seeker to be able to utilize the information from a job website on a mobile platform.

It is advantageous as the job website code can be implemented without having to write new job website code or to rewrite the code in order to become compatible with mobile devices.

Job conversion rates remain low, because of the job seeker preference of applying for jobs on desktop or laptop computers. Typically, call-to-action elements such as hyperlinks are difficult to reach as they can be small. This method is advantageous for a job seeker as a job listing can be offered through a job website on a mobile device display, wherein the seeker is able to zoom in and out and is able to scroll, together with the fact that call-to-action elements are displayed in a non-zoomable and non-scrollable area. So, when the job seeker is e.g. zooming in, out, scrolling down or up, the seeker does not have the problem that a present call-to-act element can not be reached, since these elements will always be present on an area of said display. Therefore, the job seeker is able to quickly read, navigate through and act on the information of a displayed job website.

In a more preferred embodiment, said job website content is HTML-based code.

The term "HTML-based code" is used herein to refer to a "HyperText Markup Language"-standard wherein said job website content is formatted.

It is an advantage to be able to retain existing job website content without the necessity of rewriting HTML code of said job website. For example scalability or resizability can give presentation problems for mobile devices, when not adapted to mobile platform. Even though these problems would occur, the job seeker still is able to perform actions on said at least one job offer, through the provision of said one or more call-to action elements on a non-zoomable and non-scrollable area of said mobile device display.

In a preferred embodiment, the ratio between said zoomable and/or scrollable area and said non-zoomable and non-scrollable area is situated preferably between 1.5 and 100.0, more preferably between 2.0 and 50.0, even more preferably between 3.0 and 10.0, most preferably about 3.55.

It is advantageous as this method improves ease of use of a job website on a mobile device and therefore would improve job conversion rates.

In a preferred embodiment, said one or more call-to-action elements comprises an on-map-button, wherein when clicking said on-map-button a location of said at least one job offer is shown on a map.

In a preferred embodiment, said one or more call-to-action elements comprises an favorite-button, wherein when clicking said favorite-button said at least one job offer can be saved as a favorite job offer.

In a second aspect the present invention provides a server for adapting information to a mobile platform, comprising at least one processor, the at least one processor configured to:
a.retrieving information on at least one job offer from said server;
b.providing said information of said at least one job offer to a mobile page generation module of a mobile device of a potential job candidate;
whereby said information of said at least one job offer is displayed on a zoomable and/or scrollable area (30) of a display of said mobile device and whereby one or more call-to-action elements are displayed on a non-zoomable and non-scrollable area (31) of said mobile device display.

In a third aspect the present invention provides a computer program product for recruitment adapted for mobile platform, said computer program product comprising at least one computer-readable storage medium having computer-readable program code portions stored therein, the computer-readable program code portions comprising instructions for:
a.retrieving information on at least one job offer from a job database server;
b.providing said information of said at least one job offer to a mobile page generation module of a mobile device of a potential job candidate;
whereby said information of said at least one job offer is displayed on a zoomable and/or scrollable area (30) of a display of said mobile device and whereby one or more call-to-action elements are displayed on a non-zoomable and non-scrollable area (31) of said mobile device display.

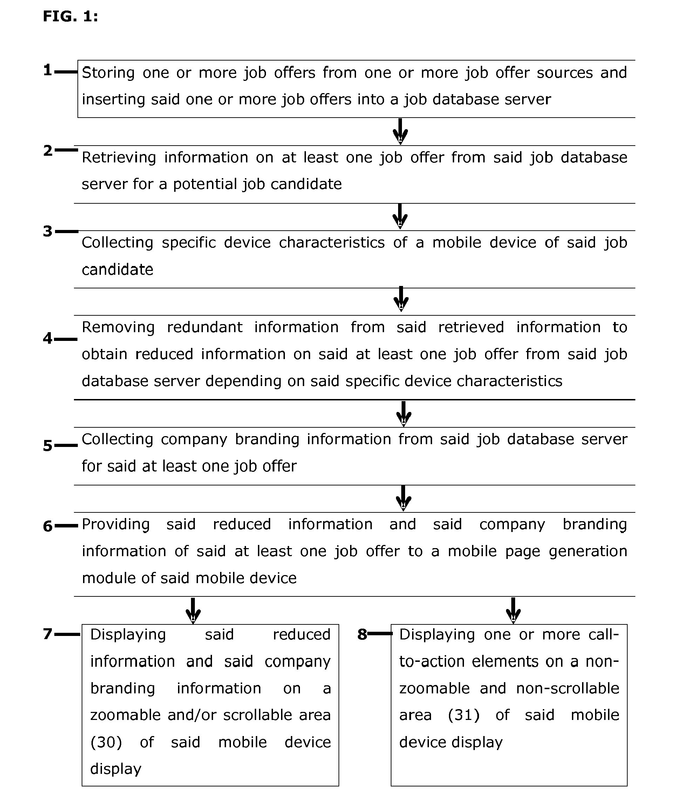

**FIG. 1** is a flow-chart diagram illustrating an exemplary method for recruitment adapted for mobile platform. Hereby, one or more job offers from one or more job offer sources are stored and inserted into a job database server (block 1).

In response to a potential job candidate, information is retrieved on at least one job offer from said job database server (block 2).

Subsequently specific device characteristics of a mobile device of said job candidate are collected (block 3).

Then redundant information is removed from said retrieved information to obtain reduced information on said at least one job offer from said job database server depending on said specific device characteristics (block 4). Also company branding information from said job database server for said at least one job offer is collected (block 5).

Said reduced information and said company branding information of said at least one job offer is provided to a mobile page generation module of said mobile device (block 6).

Said mobile device comprises a display wherein the display area is divided into a zoomable and/or scrollable area (30) and a non-zoomable and non-scrollable area. Said reduced information and said company branding information is displayed on a zoomable and/or scrollable area (30) of said mobile device display (block 7), while one or more call-to-action elements are displayed on a non-zoomable and non-scrollable area (31) of said mobile device display (block 8).

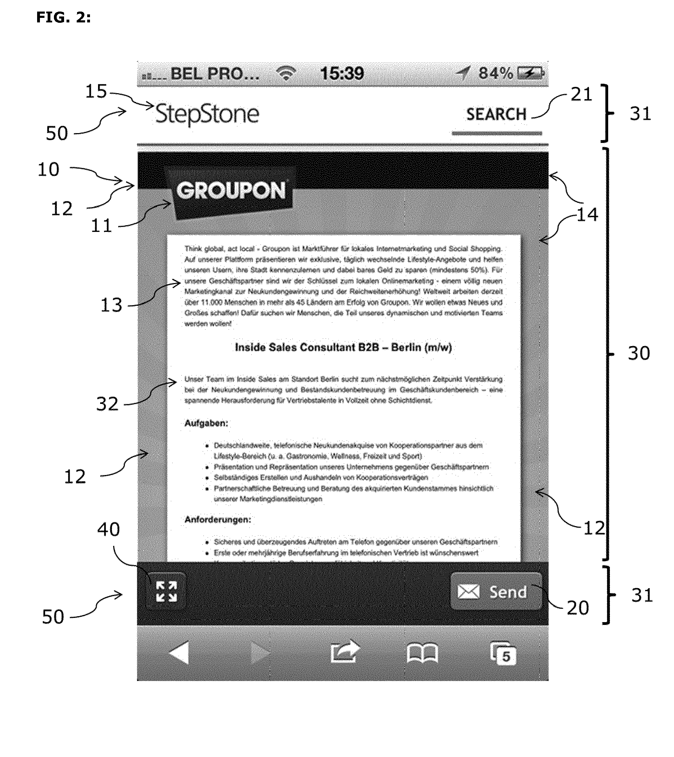

**FIG. 2** is a screenshot of a display of a mobile device illustrating an exemplary method for recruitment adapted for mobile platform.

The screenshot shows a zoomable and/or scrollable area (30) and a non-zoomable and non-scrollable area (31) of the mobile device display.

In a preferred embodiment of the method of the present invention, said non-zoomable and non-scrollable area (31) of said mobile device display is provided as one or more bars (50).

Figure 2 shows a first call-to-action bar (50), comprising a recruitment portal logo (15) and a search-button (21). A second call-to-action bar (50) comprises a send-button (20) and a "hide bars"-button (40).

The zoomable and/or scrollable area (30) comprises a job offer (32), which is provided with company branding, i.e. company style (10), company logo (11), company borders (12), company font (13), company color (14), etc.

The "hide bars"-button (40) is a call-to-action element, wherein when clicking said "hide bars"-button (40), the call-to-action bars will hide. This is advantageous, since more display area can be used for zoomable and/or scrollable area (30) of the mobile device display, which increases the job seeking navigating and experience.

In another embodiment of the invention and when a touch screen is provided to said mobile device, a tap hide bar function can be implemented. A tap hide bar function will hide or show call-to-action bars (50) when the user taps the screen.

Although the present invention has been described with reference to preferred embodiments thereof, many modifications and alternations may be made by a person having ordinary skill in the art without departing from the scope of this invention which is defined by the appended claims.

## Claims

1. A method for recruitment adapted for mobile platform, comprising:
a. retrieving information on at least one job offer from a job database server;
b. providing said information of said at least one job offer to a mobile page generation module of a mobile device of a potential job candidate;
**characterized in that** said information of said at least one job offer is displayed on a zoomable and/or scrollable area (30) of a display of said mobile device and **in that** one or more call-to-action elements are displayed on a non-zoomable and non-scrollable area (31) of said mobile device display.

2. The method of claim 1 wherein said information of said at least one job offer is job website content.

3. The method of claim 2 wherein said job website content is HTML-based code.

4. The method of claim 1 to 3 wherein the ratio between said zoomable and/or scrollable area (30) and said non-zoomable and non-scrollable area (31) is situated preferably between 1.5 and 100.0, more preferably between 2.0 and 50.0, even more preferably between 3.0 and 10.0, most preferably about 3.55.

5. The method of claim 1 to 4 further comprising storing one or more job offers from one or more job offer sources and inserting said one or more job offers into said job database server.

6. The method of claim 1 to 5 further comprising collecting specific device characteristics of said mobile device of said job candidate.

7. The method of claim 1 to 6 further comprising removing redundant information from retrieved information on said at least one job offer from said job database server depending on said specific device characteristics.

8. The method of claim 1 to 7 wherein said provided information further comprises company branding information from said job database server for said at least one job offer.

9. The method of claim 1 to 8 wherein said one or more call-to-action elements comprises a send-button (20), wherein when clicking said send-button (20) a mail with said job offer information is send to said candidate, said mail comprising a link to a job listing page on the employment portal or on a client site.

10. The method of claim 1 to 9 wherein said one or more call-to-action elements comprises a search-button (21), wherein when clicking said search-button (21) a job listing search page is displayed on said mobile device display.

11. The method of claim 1 to 10 wherein said one or more call-to-action elements comprises an apply-button, wherein when clicking said apply-button said candidate applies for said job offer and optionally details of said candidate are forwarded to a job offer employer.

12. The method of claim 1 to 11 wherein said one or more call-to-action elements comprises an on-map-button, wherein when clicking said on-map-button a location of said at least one job offer is shown on a map.

13. The method of claim 1 to 12 wherein said one or more call-to-action elements comprises an favorite-button, wherein when clicking said favorite-button said at least one job offer can be saved as a favorite job offer.

14. A server for adapting information to a mobile platform, comprising at least one processor, the at least one processor configured to:
i. retrieving information on at least one job offer from said server;
ii. providing said information of said at least one job offer to a mobile page generation module of a mobile device of a potential job candidate;
**characterized in that** said information of said at least one job offer is displayed on a zoomable and/or scrollable area (30) of a display of said mobile device and **in that** one or more call-to-action elements are displayed on a non-zoomable and non-scrollable area (31) of said mobile device display.

15. A computer program product for recruitment adapted for mobile platform, said computer program product comprising at least one computer-readable storage medium having computer-readable program code portions stored therein, the computer-readable program code portions comprising instructions for:
a. retrieving information on at least one job offer from a job database server;
b. providing said information of said at least one job offer to a mobile page generation module of a mobile device of a potential job candidate;
**characterized in that** said information of said at least one job offer is displayed on a zoomable and/or scrollable area (30) of a display of said mobile device and **in that** one or more call-to-action elements are displayed on a non-zoomable and non-scrollable area (31) of said mobile device display.
